# EUROPÄISCHE PATENTSCHRIFT

(11) **EP 4 007 704 B1**
(45) Veröffentlichungstag und Bekanntmachung des Hinweises auf die Patenterteilung: **03.07.2024**
(21) Anmeldenummer: 20750166.9
(22) Anmeldetag: 27.07.2020
(51) Int. Cl.: B42D 25/373, B42D 25/36, B42D 25/445, B44C 3/00, B22F 9/00, C09C 1/62

(54) **VERFAHREN ZUM HERSTELLEN VON EFFEKTPIGMENTEN**
METHOD FOR PRODUCING EFFECT PIGMENTS
PROCÉDÉ DE PRODUCTION DE PIGMENTS À EFFET

(30) Priorität: 02.08.2019 DE 102019005456
(43) Veröffentlichungstag der Anmeldung: 08.06.2022
(73) Patentinhaber: Giesecke+Devrient Currency Technology GmbH, 81677 München (DE)
(72) Erfinder: HOFFMÜLLER, Winfried, 83646 Bad Tölz (DE); SOBOL, Michael, 81379 München (DE); VON CLAUSBRUCH, Axel, 83646 Bad Tölz (DE); RUDISCH, Tobias, 83727 Schliersee (DE)
(74) Vertreter: Giesecke+Devrient IP
(86) Internationale Anmeldenummer: PCT/EP2020/025348
(87) Internationale Veröffentlichungsnummer: WO 2021/023395

(56) Entgegenhaltungen:
- WO-A1-99/13157
- WO-A1-2018/210597
- WO-A2-03/046245
- WO-A2-2011/064162
- US-A- 4 321 087

## Beschreibung

Die Erfindung betrifft ein Verfahren zum Herstellen von Effektpigmenten.

Effektpigmente, insbesondere sogenannte farbkippende Effektpigmente, die bei der Änderung des Betrachtungswinkels eine Änderung der Farbe aufweisen, basieren z.B. auf einem Mehrschichtaufbau wie etwa ein Cr/SiO₂/Al/SiO₂/Cr-Mehrschichtaufbau oder ein Al/SiO₂/Al/SiO₂/Al-Mehrschichtaufbau. Die zentrale Al-Schicht wirkt dabei als ein Reflektor, die endständigen metallischen Schichten haben jeweils die Funktion einer Absorberschicht, wobei zwischen dem Reflektor und dem Absorber jeweils eine dielektrische Abstandsschicht vorhanden ist. Die Herstellung solcher Effektpigmente erfolgt in der Regel so, dass der gewünschte Mehrschichtaufbau zunächst großflächig z.B. mittels Bedampfen auf einer Folie erzeugt wird. Der Mehrschichtaufbau wird anschließend von der Folie abgetrennt. Das Abtrennen des Mehrschichtaufbaus kann dadurch erleichtert werden, dass die Folie anfänglich mit einer geeigneten Release-Schicht versehen ist. Der so erhaltene Mehrschichtaufbau wird schließlich zu einzelnen Pigmenten zerkleinert. Die EP 0 227 423 B1 beispielsweise beschreibt die Herstellung einer optisch variablen Beschichtung mit den Schritten des Bereitstellens einer flexiblen Bahn, auf der eine Release-Schicht aufgebracht ist, des darauffolgenden Aufbringens einer optisch variablen, mehrschichtigen Interferenzbeschichtung, des Ablösens der Interferenzbeschichtung von der flexiblen Bahn mittels eines geeigneten Lösungsmittels und des Aufbrechens der Interferenzbeschichtung in einzelne Pigmente.

Bei der oben beschriebenen Herstellung erfolgt das Ablösen des Mehrschichtaufbaus von der Folie unkontrolliert, was zu Pigmenten mit einer breiten Größenverteilung führt. Des Weiteren führt das Zermahlen des Mehrschichtaufbaus zu Pigmenten zu frischen, unregelmäßigen Bruchkanten und zu einem für die Farbbrillanz ungünstigen Feinanteil, der vom restlichen Gemisch abgetrennt werden muss. Zudem wird für den Prozess eine hohe Menge an Lösungsmittel benötigt.

Die WO 2003/046245 A2 beschreibt ein Verfahren zum Herstellen von Plättchen, das folgenden Schritte aufweist: (a) Ablagern von Plättchenmaterial aus einer Vakuumablagerungsquelle innerhalb einer evakuierten Vakuumablagerungskammer und eines Trennschichtmaterials aus einer Trennschichtquelle innerhalb der Vakuumablagerungskammer auf eine Oberfläche einer Transportvorrichtung innerhalb der Vakuumablagerungskammer, um alternierende Schichten des Trennschichtmaterials aus der Trennschichtquelle und des aufgedampften Plättchenmaterials aus der Vakuumablagerungsquelle auf der Transportvorrichtung in einer Abfolge bereitzustellen, sodass eine mehrlagige Schichtstruktur der alternierenden Schichten des Plättchenmaterials und des dazwischen liegenden Trennschichtmaterials erhalten wird, wobei das Trennschichtmaterial ein durch ein Lösungsmittel lösbares und auflösbares Polymermaterial umfasst, dass eine glatte kontinuierliche Sperrschicht und eine Trägeroberfläche bildet, auf der die Plättchenmaterialschichten gebildet werden können; (b) Entfernen der mehrlagigen Schichtstruktur aus der Vakuumablagerungskammer; (c) Anwenden eines Lösungsmittels auf die mehrlagige Schichtstruktur, um die Trennschicht von der Plättchenmaterialschicht zu separieren; und (d) Zerkleinern der Plättchenmaterialschicht zu Plättchen.

Die US 4 321 087 A beschreibt ein kontinuierliches Verfahren zur Herstellung von fein zerteilten, dünnen, glänzenden Metallteilchen, umfassend das Aufbringen einer Trennbeschichtung auf mindestens eine Seite einer Trägerfolie, das Abscheiden eines Metallfilms mit einer Dicke von 350 bis 450 Angström auf der Trennbeschichtung, das Auflösen der Trennbeschichtung, das Entfernen des Metallfilms von der Trägerfolie und das Zerbrechen des dünnen Metallfilms in Teilchen mit einem Durchmesser zwischen 25 und 50 Mikrometer.

Die WO 2018/210597 A1 beschreibt ein Verfahren zur Herstellung dünner Silbernanopartikelschichten, die im Rahmen eines Beschichtungs- oder Druckverfahrens direkt auf einem Substrat erzeugt werden. Die Schichten zeigen unterschiedliche Farben in Transmission und Reflexion. Die Schichten zeigen nicht die typische Leitfähigkeit metallischer Schichten, da die Partikel im Wesentlichen diskrete Partikel sind, die nicht gesintert sind. Die Erfindung betrifft ferner Dekorations- und Sicherheitselemente. Wenn die Schichten über einem Sicherheitselement, wie einem Hologramm, aufgebracht werden, zeigen die erhaltenen Produkte auch unterschiedliche Farben in Reflexion und Transmission, ein extrem helles optisch variables Bild (OVD-Bild) und hohe Reinheit und hohen Kontrast. Je nach Schichtdicke erscheint ein mehr oder weniger intensiver metallischer Aspekt. Der vorliegenden Erfindung liegt die Aufgabe zugrunde, das im Stand der Technik bekannte Herstellungsverfahren zu verbessern.

Diese Aufgabe wird durch die im unabhängigen Anspruch definierte Merkmalskombination gelöst. Weiterbildungen der Erfindung sind Gegenstand der abhängigen Ansprüche.

### Ausführliche Beschreibung der Erfindung

Der vorliegenden Erfindung liegt die Idee zugrunde, die auf dem Gebiet der Sicherheitselement-Herstellung für Wertdokumente bekannte Technologie des Einsatzes einer Waschfarbe zur Feinstrukturierung von Metallisierungen bei der Bereitstellung gewünschter plättchenförmiger Effektpigmente heranzuziehen.

Sicherheitselemente mit im Durchlicht, und gegebenenfalls auch im Auflicht, visuell erkennbaren Zeichen sind bekannt. Die Zeichen können beliebige Formen haben, wie Zahlen, Buchstaben, Muster, geometrische oder figürliche Darstellungen etc., und werden allgemein unabhängig von ihrer Form als "Negativschrift" bezeichnet. Die Sicherheitselemente werden z.B. hergestellt, indem ein transparentes Substrat mit einer Beschichtung, im Allgemeinen einer metallischen Beschichtung (bzw. Metallisierung), versehen wird, die dann an bestimmten Stellen wieder entfernt wird. Hält man das Sicherheitselement gegen das Licht, erscheinen die Bereiche mit metallischer oder sonstiger Beschichtung dunkel. Die Bereiche, an denen die Beschichtung entfernt wurde, erscheinen dagegen hell oder zumindest deutlich heller als die beschichteten Bereiche, je nach Transparenz des Substrats. Je transparenter, d.h. je lichtdurchlässiger, ein Substrat ist, desto ausgeprägter ist der Kontrast zwischen beschichteten und beschichtungsfreien Bereichen. Bei sehr transparenten Substraten ist die Negativschrift nicht nur im Durchlicht, sondern auch im Auflicht deutlich erkennbar.

Bei Bedampfungsprozessen entstehen metallische Beschichtungen im Wesentlichen vollflächig. Die Bereitstellung von Aussparungen innerhalb der metallischen Beschichtung kann im einfachsten Fall durch das Einsetzen einer Blende oder eines Abschirmblechs während des Bedampfungsprozesses erfolgen. Diese Maßnahme führt lediglich zu grobstrukturierten Metallisierungen. Optisch ansprechende Sicherheitselemente erfordern allerdings eine Feinstrukturierung. Feinstrukturierte Metallisierungen können z.B. durch ein sogenanntes Waschverfahren erfolgen. In der WO 99/13157 A1 wird ein Waschverfahren beschrieben, bei dem eine Trägerfolie mit einer Druckfarbe mit hohem Pigmentanteil in Form von Zeichen bedruckt, mit einer dünnen Abdeckschicht (z.B. aus Aluminium) beschichtet und anschließend die Druckfarbe mitsamt der darüber befindlichen Abdeckschicht durch Auswaschen mit einer Flüssigkeit entfernt wird, um beschichtungsfreie Bereiche in Form der Zeichen zu erzeugen.

Die WO 92/11142 A1 (entspricht EP 0 516 790 A1) bzw. deren deutsche Prioritätsanmeldung DE 4 041 025 A1 offenbart durch Wärmeeinwirkung aktivierbare Druckfarben, beispielsweise wachshaltige Emulsionen. Bei Erwärmung erweichen diese Emulsionen und verringern dadurch die Haftung zur Trägerfolie, so dass in diesen schlecht haftenden Bereichen, unterstützt durch mechanische Behandlung, wie z.B. Ultraschall, Abbürsten oder Abreiben, sowohl die erweichte Druckfarbe als auch die darüber liegenden Schichten entfernt werden können. Außerdem werden als aktivierbare Druckfarben Farben mit aufschäumenden Additiven, wie sie bei der Herstellung von Schaumstoffen üblich sind, offenbart. Diese Treibmittel spalten unter Wärmeeinwirkung Gas ab und erzeugen Schaumstrukturen. Dadurch vergrößert sich das Volumen der Druckfarbe, wodurch die Haftung an der Trägerfolie verringert wird und die über der Druckfarbe liegenden Schichten nach außen gewölbt werden, so dass sie einen guten Angriffspunkt für eine mechanische Entfernung bieten.

Die WO 97/23357 A1 nimmt Bezug auf die EP 0 516 790 A1 und offenbart darüber hinaus aktivierbare Druckfarben, die durch Behandlung mit einem geeigneten Lösungsmittel aktiviert, d.h. ausgewaschen, werden.

Der vorliegenden Erfindung liegt die Erkenntnis zugrunde, dass bei Versuchen mit Lösungsmittel enthaltenden Waschfarbenzusammensetzungen bei steigendem Wassergehalt der Waschfarbe die Benetzung des zu benetzenden Trägersubstrats schlechter wurde. Überraschenderweise kann durch eine geeignete Wahl des Wassergehalts ein solcher Löslichkeitszustand erzeugt werden, bei dem die Waschfarbe drucktechnisch in Form eines gewissermaßen stehenden Rasters, das aufgrund der Oberflächenenergieverhältnisse nicht weiter verläuft, auf das Trägersubstrat aufgebracht werden kann. Die Stege des verwendeten Druckzylinders oder der verwendeten Druckplatte trennen die in geometrischer Entsprechung zu den Näpfchen des Druckzylinders bzw. der Druckplatte auf das Trägersubstrat aufgedruckten Waschfarbentröpfchen. Darauffolgend erfolgt der Schritt des Aufbringens einer reflektierenden Beschichtung, z.B. eine Metallisierung oder eine Mehrschichtanordnung, insbesondere eine ein farbkippendes Dünnschichtelement erzeugende Mehrschichtanordnung. Danach erfolgt der Schritt des Auswaschens, nämlich das Entfernen der Waschfarbentröpfchen zusammen mit der darauf vorliegenden reflektierenden Beschichtung, gefolgt vom Isolieren der entfernten reflektierenden Beschichtung, um auf diese Weise plättchenförmige Effektpigmente bereitzustellen.

Im Schritt des Auswaschens macht man sich die Löslichkeit des in der Waschfarbe enthaltenen Bindemittels, insbesondere ein Polymer, im Waschmedium zunutze. Die auf die Waschfarbenbereiche abgeschiedene reflektierende Beschichtung wird zusammen mit dem Bindemittel und weiteren, ggf. in der Waschfarbe enthaltenen Partikeln im Waschprozess entfernt, um auf diese Weise das gewünschte plättchenförmige Effektpigment bereitzustellen. Zurück bleibt das Trägersubstrat, auf dem in den vorher nicht mit Waschfarbe beschichteten Bereichen das aufgedampfte Netz aus reflektierender Beschichtung weitgehend unbeschädigt verbleibt.

Durch eine geeignete Wahl der Parameter Näpfchenanordnung bzw. Rasterung, flächenmäßige Näpfchengeometrie (d.h. die Abmessungen, wie etwa Länge und Breite, des jeweiligen Näpfchens in der Ebene der Druckplatte bzw. des Druckzylinders), Näpfchentiefe, der Form des Näpfchens in der Tiefe, und Stegbreite kann die Geometrie des im Verfahren zurückbleibenden Netzwerks aus reflektierender Beschichtung und damit die Geometrie der isolierten plättchenförmigen Effektpigmente gesteuert werden. Das nach dem Entfernen mittels Auswaschen und Isolieren der plättchenförmigen Pigmente zurückbleibende Netzwerk aus reflektierender Beschichtung weist keine statistische bzw. zufällige Netzstruktur auf, sondern eine definierte Netzstruktur mit definierter Linienbreite und definierter Linienstruktur. Die erzeugten plättchenförmigen Pigmente entsprechen den von den Netzlinien umgebenen Insel-Bereichen. Die Pigmentgröße ist sehr konstant und liegt innerhalb einer engen Verteilung.

Da der eingesetzte Druckzylinder oder die eingesetzte Druckplatte eine Mehrzahl an Bereichen mit unterschiedlicher Näpfchenanordnung und/oder Näpfchengeometrie aufweisen kann, lassen sich problemlos zwei oder mehr Arten von plättchenförmigen Pigmenten mit jeweils unterschiedlicher, definierter Pigmentgröße erzeugen.

Mit Bezug auf das in der Waschfarbe enthaltene Bindemittel ist grundsätzlich einer der Stoffe geeignet, die im oben mit Bezug auf das Waschverfahren zitierten Stand eingesetzt werden. Als besonders vorteilhaft haben sich für das erfindungsgemäße Verfahren Polymere erwiesen, die sowohl in Wasser, als auch in organischem Lösungsmittel, typischerweise Alkohole und/oder Ester, eine gute Löslichkeit aufweisen. Beispiele für solche Bindemittel sind Hydroxyethylcellulose, Hydroxypropylcellulose, Carboxymethylcellulose, Polyvinylalkohol insbesondere mit niedrigem Molekulargewicht und mit mittlerem Hydrolysegrad, Polyvinylpyrrolidon, Polyethylenglykol und Casein.

Mit Bezug auf das im Herstellungsverfahren zurückbleibende Trägersubstrat, auf dem in den vorher nicht mit Waschfarbe beschichteten Bereichen das aufgedampfte Netz aus reflektierender Beschichtung weitgehend unbeschädigt verbleibt, liegen die am Ende des Herstellungsverfahrens erhaltenen metallischen Linienstärken z.B. im Bereich von 1 µm bis 50 µm, wobei die Linien in der Regel so fein sind, dass sie erst beim Einsatz einer Lupe als Linien erkennbar sind. Die Insel-Bereiche innerhalb der zurückbleibenden Netzstruktur, also die anfangs mit Waschfarbe beschichteten Bereiche und damit die nach dem Verfahren erhaltenen plättchenförmigen Effektpigmente, weisen in der Länge z.B. eine Abmessung in einem Bereich von 2 µm bis 150 µm auf.

Gemäß einer bevorzugten Ausführungsform zur Herstellung der plättchenförmigen Effektpigmente werden auf einem Trägersubstrat, wie etwa eine Folie, wässrige Waschfarbentröpfchen drucktechnisch in ersten, ein erstes Motiv bildenden Bereichen geordnet aufgebracht. Der Begriff "geordnet" bezeichnet hiermit eine regelmäßige Beabstandung der einzelnen Waschfarbentröpfchen. Das drucktechnische Aufbringen kann vorzugsweise mittels einer Tiefdruckplatte oder einer Flexodruckplatte erfolgen, die einzelne Näpfchen in regelmäßiger Beabstandung aufweist. Alternativ können einzelne Näpfchengruppen vorliegen, z.B. aus sieben, hexagonal angeordnete Näpchen bestehende Gruppen, wobei die Näpfchengruppen zueinander regelmäßig beabstandet angeordnet sind. Anstelle einer Druckplatte kann auch ein Druckzylinder verwendet werden. Danach erfolgt z.B. das Aufbringen einer Metallisierung, sodass in zweiten, ein zweites Motiv bildenden Bereichen außerhalb der ersten, ein erstes Motiv bildenden Bereiche Metall auf dem Trägersubstrat in Form eines regelmäßigen, metallischen, zusammenhängenden Netzes abgeschieden wird, wobei die Waschfarbentröpfchen aufweisenden ersten, ein erstes Motiv bildenden Bereiche innerhalb des regelmäßigen, metallischen, zusammenhängenden Netzes regelmäßige Inseln ausbilden. In den ersten, ein erstes Motiv bildenden Bereichen wird Metall oberhalb der Waschfarbentröpfchen abgeschieden. Danach erfolgt das Entfernen der Waschfarbentröpfchen in den ersten Bereichen zusammen mit dem darauf vorliegenden Metall und das Isolieren des Metalls, um auf diese Weise plättchenförmige Effektpigmente bereitzustellen.

Das Verfahren zum Entfernen der Waschfarbe erfolgt mit Vorteil mittels Auflösen mit einem geeigneten Lösungsmittel. Dabei kommen z.B. Wasser, wässrige Lösungen, Mischungen von Lösungsmitteln und Wasser, ggf. mit Tensiden, ggf. mit Entschäumern und sonstigen Additiven zum Einsatz. Die Ablösung bzw. Auflösung kann auch durch Spritzdüsen oder auch mechanisch durch Bürsten, Walzen oder durch Filze unterstützt werden. Die Wahl des Lösungsmittels erfolgt zweckmäßigerweise in Abstimmung auf die Beschichtung. Typischerweise können neben Wasser die folgenden Lösungsmittel verwendet werden: Methylacetat, Ethylacetat, Propylacetat, Butylacetat, Methoxypropylacetat, Aceton, Methylethylketon, Methylisobutylketon, Cyclopentanon, Cyclohexanon, Methylenchlorid, Chloroform, Toluol, Xylol, Methanol, Ethanol, 2-Propanol. Weiterhin können Acetale oder Gemische der vorstehend genannten Lösungsmittel verwendet werden.

Grundsätzliche Anmerkungen:
Die reflektierende Beschichtung der erfindungsgemäß erhaltenen plättchenförmigen Effektpigmente kann im einfachsten Fall auf einer einzelnen Metallisierung beruhen. Als Metall eignen sich Elemente wie etwa Aluminium, Edelstahl, Nichrome, Gold, Silber, Platin und Kupfer.

Plättchenförmige Metallpigmente, die insbesondere zur Erzeugung einer drucktechnisch erhältlichen Reflexionsschicht geeignet sind, sind z.B. aus der WO 2013/186167 A2, der WO 2010/069823 A1, der WO 2005/051675 A2 und der WO 2011/064162 A2 bekannt.

Die reflektierende Beschichtung der erfindungsgemäß erhaltenen plättchenförmigen Effektpigmente kann des Weiteren einen Mehrschichtaufbau aufweisen, z.B. einen Interferenzschichtaufbau, der je nach Betrachtungswinkel einen anderen Farbton annimmt. Ein solcher Interferenzschichtaufbau basiert typischerweise auf einer Reflexionsschicht, einer teildurchlässigen Schicht bzw. Absorberschicht und einer dazwischen liegenden dielektrischen Abstandsschicht. Die dielektrische Abstandsschicht basiert beispielsweise auf Glimmer, auf SiO₂ oder auf Al₂O₃. Ein bevorzugtes Beispiel ist eine Mehrschichtanordnung mit der Schichtenfolge semitransparente Absorberschicht / dielektrische Abstandsschicht / Reflexionsschicht, z.B. eine Cr/SiO₂/Al- Mehrschichtanordnung. Pigmente mit einem Dünnschicht-Interferenzschichtaufbau können auch einen fünfschichtigen Aufbau aufweisen wie etwa die Schichtenfolge semitransparente Absorberschicht / dielektrische Abstandsschicht / Reflexionsschicht / dielektrische Abstandsschicht / semitransparente Absorberschicht, z.B. eine Cr/SiO₂/Al/ SiO₂/Cr- Mehrschichtanordnung oder eine Al/SiO₂/ Al/ SiO₂/ Al- Mehrschichtanordnung, wobei im Falle der Al/SiO₂/Al/ SiO₂/ Al- Mehrschichtanordnung die zentrale Al-Schicht eine höhere Schichtdicke wie jede der beiden endständigen Al-Schichten aufweist.

Weiterhin kann eine zusätzliche, magnetische Schicht innerhalb der Mehrschichtanordnung erzeugt werden, um auf diese Weise magnetisch orientierbare Pigmente bereitzustellen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Figuren 1-4: eine Herstellung erfindungsgemäßer plättchenförmiger Effektpigmente;
- Figur 5: ein nach einer ersten erfindungsgemäßen Herstellung zurückbleibendes Netz aus reflektierender Beschichtung in 25'facher Vergrößerung;
- Figur 6: das nach einer ersten erfindungsgemäßen Herstellung zurückbleibende Netz aus reflektierender Beschichtung in 100'facher Vergrößerung;
- Figur 7: ein nach einer zweiten erfindungsgemäßen Herstellung zurückbleibendes Netz aus reflektierender Beschichtung in 25'facher Vergrößerung; und
- Figur 8: das nach der zweiten erfindungsgemäßen Herstellung zurückbleibende Netz aus reflektierender Beschichtung in 100'facher Vergrößerung.

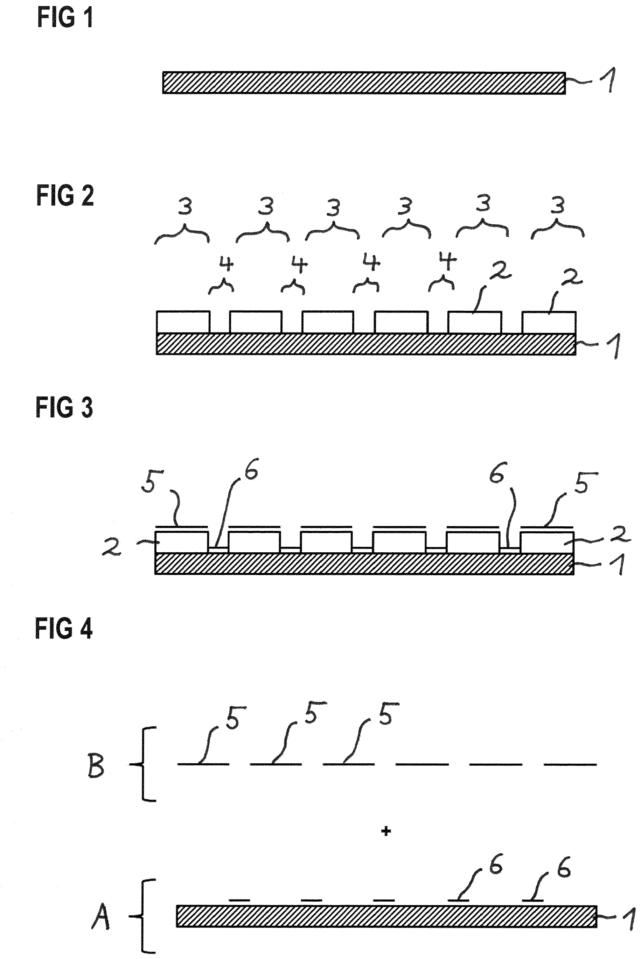

Figuren 1 bis 4 veranschaulichen jeweils in Querschnittansicht die erfindungsgemäße Herstellung plättchenförmiger Effektpigmente 5 gemäß einem Ausführungsbeispiel.

Gemäß der Figur 1 wird ein Trägersubstrat 1, im Beispiel eine Polyethylenterephthalat(PET)-Folie, bereitgestellt.

Gemäß der Figur 2 erfolgt das geordnete, drucktechnische Aufbringen wässriger Waschfarbentröpfchen 2 auf das Trägersubstrat 1 in ersten, ein erstes Motiv bildenden Bereichen 3. In zweiten, ein zweites Motiv bildenden Bereichen 4 werden keine Waschfarbentröpfchen 2 aufgebracht.

Gemäß der Figur 3 erfolgt das Aufbringen einer reflektierenden Beschichtung (5, 6), z.B. eine Metallisierung oder ein Interferenzschichtaufbau, auf das Trägersubstrat 1, sodass in zweiten, ein zweites Motiv bildenden Bereichen 4 außerhalb der ersten, ein erstes Motiv bildenden Bereiche 3 reflektierende Beschichtung 6 auf dem Trägersubstrat 1 in Form eines regelmäßigen, zusammenhängenden Netzes abgeschieden wird, wobei die Waschfarbentröpfchen 2 aufweisenden ersten, ein erstes Motiv bildenden Bereiche 3 innerhalb des regelmäßigen, zusammenhängenden Netzes regelmäßige Inseln ausbilden. In den ersten, ein erstes Motiv bildenden Bereichen 3 wird reflektierende Beschichtung 5 oberhalb der Waschfarbentröpfchen 2 abgeschieden.

Anschließend erfolgt das Entfernen der Waschfarbentröpfchen 2 in den ersten Bereichen 3 zusammen mit der darauf vorliegenden reflektierenden Beschichtung 5 durch Auswaschen mit einer geeigneten Waschlösung (siehe Erzeugnis "B" in der Figur 4). Die plättchenförmigen Effektpigmente 5 werden daraufhin isoliert.

Zurück bleibt das in der Figur 4 gezeigte Erzeugnis "A", nämlich das Trägersubstrat 1, das lediglich in den zweiten, ein zweites Motiv bildenden Bereichen 4 eine reflektierende Beschichtung 6 in Form eines regelmäßigen, zusammenhängenden Netzes aufweist.

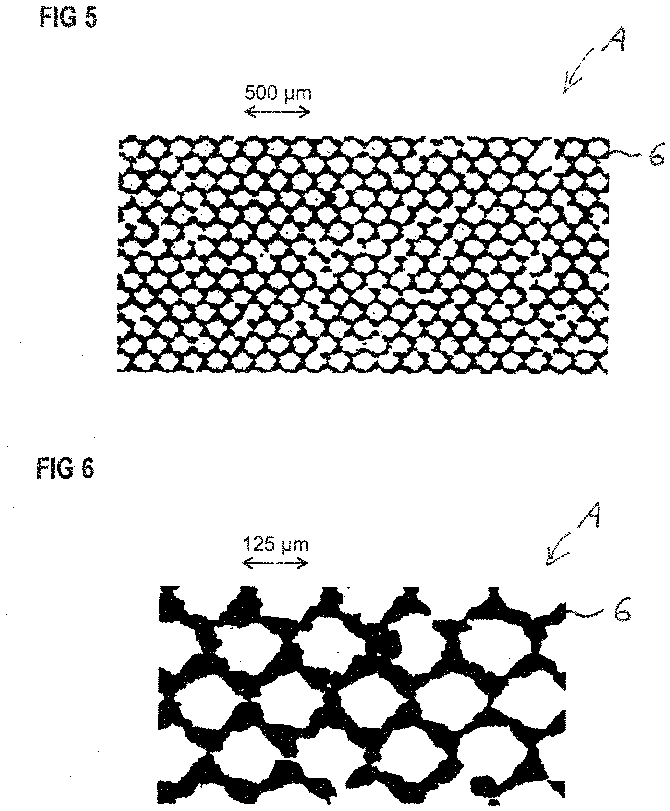

Figur 5 zeigt die Aufnahme eines zurückbleibenden Netzes "A" aus reflektierender Beschichtung 6 in 25'facher Vergrößerung. Die Herstellung erfolgte durch Verwenden einer Näpfchen aufweisenden Tiefdruckplatte. Die für das drucktechnische Aufbringen wässriger Waschfarbentröpfchen eingesetzte Waschfarbe basierte auf dem Bindemittel Polyvinylpyrrolidon. Nach dem Aufdampfen einer Metallisierung, im Beispiel eine Al-Schicht, erfolgte der Schritt des Auswaschens mit einer wässrigen Waschlösung. Auf dem Trägersubstrat, im Beispiel eine Polyethylenterephthalat(PET)-Folie, verblieb eine transparente, leitfähige Metallisierung in Form eines regelmäßigen, zusammenhängenden Netzes. In der Figur 5 erkennbar ist die gezielte Metalllinienführung, die die Stege der bei der Herstellung verwendeten Tiefdruckplatte wiederspiegelt, und die regelmäßigen Inseln, die die erzeugten plättchenförmigen Effektpigmente (siehe die Bezugsnummer 5 in der Figur 4) wiederspiegeln.

Die Figur 6 zeigt die Aufnahme des zurückbleibenden Netzes "A" aus reflektierender Beschichtung 6 in 100'facher Vergrößerung in Draufsicht.

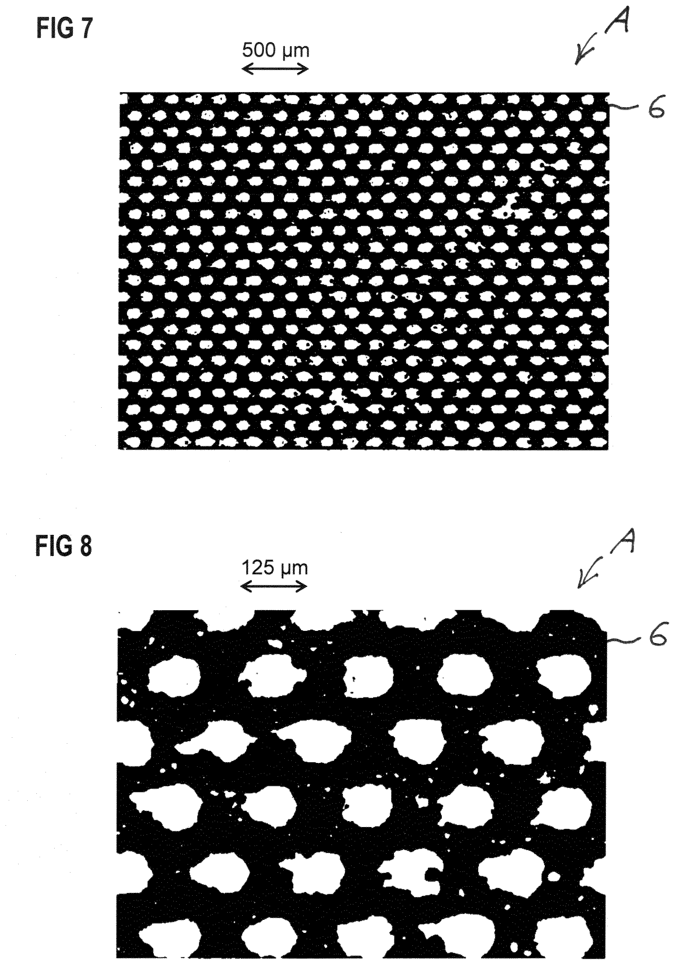

Figur 7 zeigt ein nach einer zweiten erfindungsgemäßen Herstellung zurückbleibendes Netz "A" aus reflektierender Beschichtung 6 in 25'facher Vergrößerung. Dabei wurden plättchenförmige Effektpigmente (siehe die Bezugsnummer 5 in der Figur 4) im Wesentlichen gemäß demselben Herstellungsverfahren wie oben mit Bezug auf die Figuren 5 und 6 erhalten, wobei dieses Mal für das drucktechnische Aufbringen wässriger Waschfarbentröpfchen 2 eine andere Tiefdruckplatte mit höherer Stegbreite eingesetzt wurde. In der Figur 7 erkennbar ist die gezielte Metalllinienführung, die die Stege der bei der Herstellung verwendeten Tiefdruckplatte wiederspiegelt, und die regelmäßigen Inseln, die die erzeugten plättchenförmigen Effektpigmente (siehe die Bezugsnummer 5 in der Figur 4) wiederspiegeln.

Die Figur 8 zeigt die Aufnahme des nach der zweiten erfindungsgemäßen Herstellung zurückbleibenden Netzes "A" aus reflektierender Beschichtung 6 in 100'facher Vergrößerung in Draufsicht.

## Patentansprüche

1. Verfahren zum Herstellen von plättchenförmigen Effektpigmenten (5), umfassend die folgenden Schritte:
a) das Bereitstellen eines Trägersubstrats (1);
b) das geordnete, drucktechnische Aufbringen wässriger Waschfarbentröpfchen (2) auf das Trägersubstrat (1) in ersten, ein erstes Motiv bildenden Bereichen (3);
c) das Aufbringen einer reflektierenden Beschichtung (5, 6) auf das Trägersubstrat, sodass
- in zweiten, ein zweites Motiv bildenden Bereichen (4) außerhalb der ersten, ein erstes Motiv bildenden Bereiche (3) reflektierende Beschichtung (6) auf dem Trägersubstrat (1) in Form eines regelmäßigen, zusammenhängenden Netzes abgeschieden wird, wobei die Waschfarbentröpfchen (2) aufweisenden ersten, ein erstes Motiv bildenden Bereiche (3) innerhalb des regelmäßigen, zusammenhängenden Netzes regelmäßige Inseln ausbilden;
- in den ersten, ein erstes Motiv bildenden Bereichen (3) reflektierende Beschichtung (5) oberhalb der Waschfarbentröpfchen (2) abgeschieden wird;
d) das Entfernen der Waschfarbentröpfchen (2) in den ersten Bereichen (3) zusammen mit der darauf vorliegenden reflektierenden Beschichtung (5) und das Isolieren der entfernten reflektierenden Beschichtung (5) in Form von plättchenförmigen Effektpigmenten (5), wobei das verbleibende Trägersubstrat (1) so beschaffen ist, dass es lediglich in den zweiten, ein zweites Motiv bildenden Bereichen (4) eine reflektierende Beschichtung (6) in Form eines regelmäßigen, zusammenhängenden Netzes aufweist.

2. Verfahren nach Anspruch 1, wobei der Schritt b), nämlich das geordnete, drucktechnische Aufbringen wässriger Waschfarbentröpfchen (2) auf das Trägersubstrat (1) in ersten, ein erstes Motiv bildenden Bereichen (3), mittels eines ein Näpfchenraster aufweisenden Druckzylinders oder einer ein Näpfchenraster aufweisenden Druckplatte erfolgt, wobei durch eine geeignete Wahl der Parameter Näpfchenanordnung, flächenmäßige Näpfchengeometrie, Näpfchentiefe und Stegbreite die Geometrie der im Verfahren erzeugten plättchenförmigen Effektpigmente (5) bestimmt wird.

3. Verfahren nach Anspruch 2, wobei der Druckzylinder oder die Druckplatte eine Mehrzahl unterschiedlicher Näpfchenraster-Bereiche aufweist, wobei sich die Näpfchenraster-Bereiche in zumindest einem der Parameter Näpfchenanordnung, flächenmäßige Näpfchengeometrie, Näpfchentiefe und Stegbreite unterscheiden, sodass die im Verfahren erzeugten plättchenförmigen Effektpigmente (5) eine der Mehrzahl der unterschiedlichen Näpfchenraster-Bereiche entsprechende Mehrzahl an plättchenförmigen Effektpigmenten (5) mit unterschiedlicher Geometrie aufweisen.

4. Verfahren nach einem der Ansprüche 1 bis 3, wobei die wässrigen Waschfarbentröpfchen (2) im Schritt b) auf einer ein Bindemittel aufweisenden wässrigen Waschfarbe basieren, wobei das Bindemittel vorzugsweise ein Polymer ist und das Polymer insbesondere bevorzugt von der Gruppe bestehend aus Hydroxyethylcellulose, Hydroxypropylcellulose, Carboxymethylcellulose, Polyvinylalkohol insbesondere mit niedrigem Molekulargewicht und mit mittlerem Hydrolysegrad, Polyvinylpyrrolidon, Polyethylenglykol und Casein gewählt ist.

5. Verfahren nach einem der Ansprüche 1 bis 4, wobei zwischen den Schritten b) und c) ein Trocknen der auf das Trägersubstrat (1) aufgebrachten wässrigen Waschfarbentröpfchen (2) durchgeführt wird.

6. Verfahren nach einem der Ansprüche 1 bis 5, wobei im Schritt a) eine Folie als Trägersubstrat bereitgestellt wird.

7. Verfahren nach einem der Ansprüche 1 bis 6, wobei die im Schritt c) aufgebrachte reflektierende Beschichtung (5, 6), und damit jedes der im Schritt d) isolierten plättchenförmigen Effektpigmente (5), eine Metallisierung ist, vorzugsweise eine von der Gruppe bestehend aus Aluminium, Edelstahl, Nichrome, Gold, Silber, Platin und Kupfer gewählte Metallisierung.

8. Verfahren nach einem der Ansprüche 1 bis 6, wobei die im Schritt c) aufgebrachte reflektierende Beschichtung (5, 6), und damit jedes der im Schritt d) isolierten plättchenförmigen Effektpigmente (5), eine Mehrschichtanordnung aufweist, vorzugsweise eine Mehrschichtanordnung mit der Schichtenfolge:
- semitransparente Absorberschicht / dielektrische Abstandsschicht / Reflexionsschicht; oder
- semitransparente Absorberschicht / dielektrische Abstandsschicht / Reflexionsschicht / dielektrische Abstandsschicht / semitransparente Absorberschicht.

9. Verfahren nach Anspruch 8, wobei die im Schritt c) aufgebrachte reflektierende Beschichtung (5, 6), und damit jedes der im Schritt d) isolierten plättchenförmigen Effektpigmente (5), eine Mehrschichtanordnung mit der Schichtenfolge semitransparente Absorberschicht / dielektrische Abstandsschicht / Reflexionsschicht aufweist, nämlich eine Cr/SiO₂/Al-Mehrschichtanordnung.

10. Verfahren nach Anspruch 8, wobei die im Schritt c) aufgebrachte reflektierende Beschichtung (5, 6), und damit jedes der im Schritt d) isolierten plättchenförmigen Effektpigmente (5), eine Mehrschichtanordnung mit der Schichtenfolge semitransparente Absorberschicht / dielektrische Abstandsschicht / Reflexionsschicht / dielektrische Abstandsschicht / semitransparente Absorberschicht aufweist, nämlich eine Cr/SiO₂/Al/ SiO₂/Cr- Mehrschichtanordnung oder eine Al/SiO₂/ Al/ SiO₂/ Al-Mehrschichtanordnung, wobei im Falle der Al/SiO₂/ Al/ SiO₂/ Al-Mehrschichtanordnung die zentrale Al-Schicht eine höhere Schichtdicke wie jede der beiden endständigen Al-Schichten aufweist.

## Claims

1. Method for producing platelet-shaped effect pigments (5), comprising the following steps:
a) the providing of a carrier substrate (1);
b) the ordered print application of aqueous washable ink droplets (2) to the carrier substrate (1) in first regions (3), forming a first motif;
c) the applying of a reflective coating (5, 6) to the carrier substrate, so that
- in second regions (4), forming a second motif, outside the first regions (3) forming a first motif, reflective coating (6) is deposited on the carrier substrate (1) in the form of a regular coherent network, with the first regions (3) forming a first motif and comprising washable ink droplets (2) forming regular islands within the regular coherent network;
- in the first regions (3) forming a first motif, reflective coating (5) is deposited above the washable ink droplets (2);
d) the removing of the washable ink droplets (2) in the first regions (3) together with the reflective coating (5) present thereon, and the isolating of the removed reflective coating (5) in the form of platelet-shaped effect pigments (5), with the remaining carrier substrate (1) being such that it comprises a reflective coating (6) in the form of a regular coherent network only in the second regions (4) forming a second motif.

2. Method according to Claim 1, wherein step b), namely the ordered print application of aqueous washable ink droplets (2) to the carrier substrate (1) in first regions (3) forming a first motif, takes place by means of a printing cylinder or printing plate, each comprising a cell screen, with the geometry of the platelet-shaped effect pigments (5) generated in the method being determined by a suitable choice of the parameters of cell arrangement, areal cell geometry, cell depth and land width.

3. Method according to Claim 2, wherein the printing cylinder or printing plate comprises a plurality of different cell screen regions, with the cell screen regions differing in at least one of the parameters of cell arrangement, areal cell geometry, cell depth and land width, so that the platelet-shaped effect pigments (5) generated in the method comprise a plurality, corresponding to the plurality of the different cell screen regions, of platelet-shaped effect pigments (5) having different geometry.

4. Method according to any of Claims 1 to 3, wherein the aqueous washable ink droplets (2) in step b) are based on an aqueous washable ink comprising a binder, with the binder preferably being a polymer and the polymer being selected more particularly preferably from the group consisting of hydroxyethyl cellulose, hydroxypropyl cellulose, carboxymethyl cellulose, polyvinyl alcohol more particularly with low molecular weight and with moderate degree of hydrolysis, polyvinylpyrrolidone, polyethylene glycol and casein.

5. Method according to any of Claims 1 to 4, wherein drying of the aqueous washable ink droplets (2) applied to the carrier substrate (1) is carried out between steps b) and c) .

6. Method according to any of Claims 1 to 5, wherein a film is provided as carrier substrate in step a).

7. Method according to any of Claims 1 to 6, wherein the reflective coating (5, 6) applied in step c), and hence each of the platelet-shaped effect pigments (5) isolated in step d), is a metallization, preferably a metallization selected from the group consisting of aluminium, stainless steel, nichrome, gold, silver, platinum and copper.

8. Method according to any of Claims 1 to 6, wherein the reflective coating (5, 6) applied in step c), and hence each of the platelet-shaped effect pigments (5) isolated in step d), comprises a multilayer arrangement, preferably a multilayer arrangement with the following layer sequence:
- semi-transparent absorber layer/dielectric spacer layer/reflective layer; or
- semi-transparent absorber layer/dielectric spacer layer/reflective layer/dielectric spacer layer/semi-transparent absorber layer.

9. Method according to Claim 8, wherein the reflective coating (5, 6) applied in step c), and hence each of the platelet-shaped effect pigments (5) isolated in step d), comprises a multilayer arrangement with the layer sequence of semi-transparent absorber layer/dielectric spacer layer/reflective layer, specifically a Cr/SiO₂/Al multilayer arrangement.

10. Method according to Claim 8, wherein the reflective coating (5, 6) applied in step c), and hence each of the platelet-shaped effect pigments (5) isolated in step d), comprises a multilayer arrangement with the layer sequence of semi-transparent absorber layer/dielectric spacer layer/reflective layer/dielectric spacer layer/semi-transparent absorber layer, specifically a Cr/SiO₂/Al/SiO₂/Cr multilayer arrangement or an Al/SiO₂/Al/SiO₂/Al multilayer arrangement, with the central Al layer in the case of the Al/SiO₂/Al/SiO₂/Al multilayer arrangement having a higher layer thickness than each of the two end-positioned Al layers.

## Revendications

1. Procédé de préparation de pigments (5) conférant un effet sous forme de plaquettes, comprenant les étapes suivantes :
a) la mise à disposition d'un substrat support (1) ;
b) l'application ordonnée, par une technique d'impression, de gouttelettes (2) aqueuses d'encre lavable sur le substrat support (1) dans des premières zones (3) formant un premier motif ;
c) l'application d'un revêtement réfléchissant (5, 6) sur le substrat support de telle sorte que
- du revêtement réfléchissant est déposé sur le substrat support (1) sous forme d'un réseau régulier cohérent dans des deuxièmes zones (4), formant un deuxième motif, en dehors des premières zones (3) formant un premier motif, les premières zones (3) formant un premier motif, présentant les gouttelettes (2) d'encre lavable formant des îlots réguliers à l'intérieur du réseau régulier cohérent ;
- du revêtement réfléchissant (5) est déposé au-dessus des gouttelettes (2) d'encre lavable dans les premières zones (3) formant un premier motif ;
d) l'élimination des gouttelettes (2) d'encre lavable dans les premières zones (3) conjointement avec le revêtement (5) réfléchissant se trouvant sur celles-ci et l'isolement du revêtement (5) réfléchissant éliminé sous forme de pigments (5) conférant un effet sous forme de plaquettes, la substrat support (1) résiduel étant conçu de manière telle qu'il présente un revêtement (6) réfléchissant sous forme d'un réseau régulier, cohérent uniquement dans les deuxièmes zones (4) formant un deuxième motif.

2. Procédé selon la revendication 1, dans lequel l'étape b), à savoir l'application ordonnée, par une technique d'impression, de gouttelettes (2) aqueuses d'encre lavable sur le substrat support (1) dans des premières zones (3) formant un premier motif est effectuée au moyen d'un cylindre d'impression présentant une grille de godets ou d'une plaque d'impression présentant une grille de godets, la géométrie des pigments (5) conférant un effet sous forme de plaquettes générés dans le procédé étant déterminée par un choix approprié des paramètres agencement des godets, géométrie plane des godets, profondeur des godets et largeur d'âme.

3. Procédé selon la revendication 2, dans lequel le cylindre d'impression ou la plaque d'impression présente une multitude de zones différentes de grille de godets, les zones de grille de godets se distinguant par au moins l'un des paramètres agencement des godets, géométrie plane des godets, profondeur des godets et largeur d'âme, de telle sorte que les pigments (5) conférant un effet sous forme de plaquettes générés dans le procédé présentent une multitude de pigments (5) conférant un effet sous forme de plaquettes dotés d'une géométrie différente, correspondant à la multitude de zones différentes de grille de godets.

4. Procédé selon l'une des revendications 1 à 3, dans lequel les gouttelettes (2) aqueuses d'encre lavable dans l'étape b) sont basées sur une encre lavable aqueuse présentant un liant, le liant étant de préférence un polymère et le polymère étant en particulier de préférence choisi dans le groupe constitué par l'hydroxyéthylcellulose, l'hydroxypropylcellulose, la carboxyméthylcellulose, le poly(alcool vinylique), présentant en particulier un bas poids moléculaire et un degré d'hydrolyse moyen, la polyvinylpyrrolidone, le polyéthylèneglycol et la caséine.

5. Procédé selon l'une des revendications 1 à 4, dans lequel un séchage des gouttelettes (2) aqueuses d'encre lavable appliquées sur le substrat support (1) est réalisé entre les étapes b) et c).

6. Procédé selon l'une des revendications 1 à 5, dans lequel une feuille est mise à disposition en tant que substrat support dans l'étape a).

7. Procédé selon l'une des revendications 1 à 6, dans lequel le revêtement (5, 6) réfléchissant appliqué dans l'étape c) et par conséquent chacun des pigments (5) conférant un effet sous forme de plaquettes isolés dans l'étape d) est une métallisation, de préférence une métallisation choisie dans le groupe constitué par l'aluminium, l'acier inoxydable, le nichrome, l'or, l'argent, le platine et le cuivre.

8. Procédé selon l'une des revendications 1 à 6, dans lequel le revêtement (5, 6) réfléchissant appliqué dans l'étape c) et par conséquent chacun des pigments (5) conférant un effet sous forme de plaquettes isolés dans l'étape d) présente un agencement multicouche, de préférence un agencement multicouche présentant l'ordre des couches :
- couche d'absorbeur semi-transparente / couche d'écartement diélectrique / couche de réflexion ; ou
- couche d'absorbeur semi-transparente / couche d'écartement diélectrique / couche de réflexion / couche d'écartement diélectrique / couche d'absorbeur semi-transparente.

9. Procédé selon la revendication 8, dans lequel le revêtement (5, 6) réfléchissant appliqué dans l'étape c) et par conséquent chacun des pigments (5) conférant un effet sous forme de plaquettes isolés dans l'étape d) présente un agencement multicouche, présentant l'ordre des couches couche d'absorbeur semi-transparente / couche d'écartement diélectrique / couche de réflexion, à savoir un agencement multicouche Cr/SiO₂/Al.

10. Procédé selon la revendication 8, dans lequel le revêtement (5, 6) réfléchissant appliqué dans l'étape c) et par conséquent chacun des pigments (5) conférant un effet sous forme de plaquettes isolés dans l'étape d) présente un agencement multicouche, présentant l'ordre des couches couche d'absorbeur semi-transparente / couche d'écartement diélectrique / couche de réflexion / couche d'écartement diélectrique / couche d'absorbeur semi-transparente, à savoir un agencement multicouche Cr/SiO₂/Al/SiO₂/Cr ou un agencement multicouche Al/SiO₂/Al/SiO₂/Al, où, dans le cas de l'agencement multicouche Al/SiO₂/Al/SiO2/Al, la couche centrale d'Al présente une épaisseur de couche supérieure à celle des deux couches d'extrémité d'Al.
